**Europäisches Patentamt**

**European Patent Office**

**Office européen des brevets**

(19)

(11) Veröffentlichungsnummer : **0 108 154**
**B1**

(12) **EUROPÄISCHE PATENTSCHRIFT**

(45) Veröffentlichungstag der Patentschrift :
**30.12.86**

(21) Anmeldenummer : **82109263.2**

(22) Anmeldetag : **07.10.82**

(51) Int. Cl.⁴ : **B 60 C 27/08**, B 60 C 27/06,
F 16 G 15/02

(54) **Reifen- und Gleitschutzkette für gummibereifte Fahrzeuge, insbesondere für schwere, schnellfahrende Erdbewegungsmaschinen.**

(43) Veröffentlichungstag der Anmeldung :
**16.05.84 Patentblatt 84/20**

(45) Bekanntmachung des Hinweises auf die Patenterteilung : **30.12.86 Patentblatt 86/52**

(84) Benannte Vertragsstaaten :
**AT BE CH DE FR GB IT LI LU NL SE**

(56) Entgegenhaltungen :
**DE-A- 1 817 170**
**DE-A- 1 948 717**
**DE-A- 2 137 945**
**DE-A- 2 518 132**
**FR-A- 2 145 247**
**FR-A- 2 148 435**
**GB-A- 1 346 135**

(73) Patentinhaber : **Asbeck, Heinz**
**Markusstrasse 38**
**D-4600 Dortmund-Hohensyburg (DE)**

(72) Erfinder : **Asbeck, Heinz**
**Markusstrasse 38**
**D-4600 Dortmund-Hohensyburg (DE)**

(74) Vertreter : **Willert, Rolf et al**
**Patent- und Rechtsanwälte Dr.-Ing. Stuhlmann Dipl.-Ing. Willert Dr.-Ing. Oidtmann Dipl.-Ing. Bockermann Dipl.-Ing. Schneiders Bergstrasse 159**
**D-4630 Bochum 1 (DE)**

**Beschreibung**

Die Erfindung betrifft eine Reifen- und Gleitschutzkette nach dem Oberbegriff des Anspruchs 1.

Reifen- und Gleitschutzketten dieser Art kommen bei Radladern, Muldenkippern, Scrapern, Dumpern, Gradern und sonstigen schweren Erdbewegungsfahrzeugen mit Gummibereifung zum Einsatz. Deren Geschwindigkeit im Gelände kann bis zu 65 km/h betragen.

Eine Reifen- und Gleitschutzkette der eingangs genannten Art ist aus der DE-A-1 817 170 bekannt. Besonderes Merkmal dieser bekannten Kette ist, daß die einzelnen Teile keine Schweißnähte aufweisen. Die Reifenauflageplatte ist jedoch ebenso wie die Laufplatte mit schmalem, rechteckigem Grundriß ausgebildet, so daß die Reifenauflageplatte nicht kippfest auf der Reifenoberfläche steht. Durch die starken Beanspruchungen kommt es daher zu einer Lageveränderung der Grundkörper auf der Reifenoberfläche und damit zu einem ungleichmäßigen Verschleiß der Teile. Davon betroffen ist auch die zwischen den einzelnen Grundkörpern befindliche Verbindungsbügel.

Um die Nachteile der bekannten Ketten zu vermeiden, hat man bereits vorgeschlagen (EP-A-0 084 579), den Grundkörper jeweils aus Platten etwa quadratischen Querschnitts zu bilden. Die durch die Haltebügel gebildete Ebene verläuft etwa senkrecht zu den Plattenebenen. Verbindungsbügel, die in einen Grundkörper eingehakt sind, greifen in die Haltebügel zweier benachbarter Grundkörper ein, um einen Verbund aus Grundkörpern und Verbindungsgliedern zu bilden. Auch nach fortgeschrittenem Verschleiß und dadurch erforderlichem Nachspannen ändert sich die Winkelstellung der Grundkörper bezüglich der Laufrichtung nicht. Die Grundkörper stützen sich breit und flächig an der Reifenoberfläche ab. Kippbewegungen werden weitestgehend vermieden. Schweißungen sind nicht erforderlich. Die Kette läßt sich vor Ort ohne Hilfsmittel montieren. Eine Montage ist möglich, ohne die Kette von dem Reifen abzunehmen.

Der praktische Einsatz der vorgeschlagenen Reifen- und Gleitschutzkette hat jedoch gezeigt, daß Verbesserungen angebracht sind. So erfordern z. B. die mit Abstand seitlich der gemeinsamen Längsebene der Haltebügel liegenden Haltevorsprünge ein spezielles Verfahren zum Schmieden des Grundkörpers. Auch greifen infolge der besonderen Anordnung der Haltevorsprünge der Verbindungsbügel außerhalb der Längsebene am Grundkörper an. Auf Grund der dann langen Hebelarme besteht die Gefahr, daß die Auflageplatte und die Laufplatte auseinandergebogen werden. Die Möglichkeit der Deformierung ist groß, weil der Kraftfluß in ungünstiger Weise im Abstand von der Längsebene in die Platten geleitet wird. Schließlich besteht auch die Gefahr, daß die Haltevorsprünge bei ungünstigen Betriebsbedingungen abbrechen können.

Der Erfindung liegt die Aufgabe zugrunde, eine Reifen- und Gleitschutzkette der eingangs genannten Art zu schaffen, bei der der Kraftfluß innerhalb jedes Grundkörpers günstiger gestaltet wird und insbesondere das Schmieden der einzelnen Grundkörper erleichtert wird, indem die Trennebene zwischen Obergesenk und Untergesenk in der Längsebene des Grundkörpers verläuft.

Diese Aufgabe wird durch die im Anspruch 1 angegebene Erfindung gelöst.

Die Anordnung der Haltevorsprünge in der Längsebene der Haltebügel beiderseits des dazu quer gerichteten, Laufplatte und Auflageplatte verbindenden Stabilisierungsstegs schafft die Voraussetzung dafür, daß die Rastnasen der Verbindungsbügel nunmehr annähernd in den Längsebenen der Grundkörper mit den Haltevorsprüngen in Kontakt gelangen. Dabei wird jeder Haltevorsprung eines Grundkörpers durch je eine Rastnase beider zugeordneter Verbindungsbügel belastet. Der Angriff erfolgt in entgegengesetzte Richtungen. Folglich wird der Kraftfluß mittig in den Grundkörper eingeleitet. Die Hebelarme sind praktisch gleich Null. Ein Aufbiegen der Auflageplatte zur Laufplatte hin wird vermieden.

Die Trennebene von Ober- und Untergesenk kann jetzt exakt in die Längsebene der Grundkörper verlegt werden. Es sind keine Überschneidungen mehr vorhanden, die ein mehrstufiges Herstellungsverfahren erfordern. Der Verfahrensaufwand wird mithin erheblich gesenkt. Durch die abgewinkelten Längenabschnitte der einen Seitenwand des Stabilisierungsstegs wird ein problemloses Zusammenspiel mit den Verbindungsbügeln erreicht, wenn diese in die Grundkörpern eingehängt und aus diesen entfernt werden sollen.

Durch die Anordnung gemäß den Merkmalen des Anspruchs 2 wird sichergestellt, daß sämtliche Verbindungsbügel nicht nur leicht in die Grundkörper eingehängt werden können, sondern auch nach dem Einhängen das zum ordnungsgemäßen Betrieb einer Reifen- und Gleitschutzkette erforderliche Spiel besitzen. Dabei ist nicht nur die Dicke der Stabilisierungsstege mit berücksichtigt, sondern auch die Stärke der gerundeten Abschnitte der Verbindungsbügel, welche bewußt überdimensioniert sind, um an diesen Stellen genügend Verschleißmasse zu haben, welche eine lange Standzeit der Kette garantiert.

Die vorstehenden Eigenschaften werden durch die Merkmale des Anspruchs 3 noch weiter verbessert. Die kanalartigen Bereiche zwischen den in den vertikalen Querebenen verlaufenden Seitenwänden der Stabilisierungsstege und den benachbarten Haltevorsprüngen an der Auflageplatte sowie an der Laufplatte dienen dem präzisen Einführen der Verbindungsbügelschenkel in Richtung der Querebene. Ihre Breite ist in Relation zu der Dicke der Verbindungsbügelschenkel so gestaltet, daß diese auch unter erschwerten Montagebedingungen ohne Zwängung eingefädelt werden können.

Annähernd gleiche Festigkeitsverhältnisse der Rastnasen an den Enden der Verbindungsbügelschenkel einerseits und der Haltevorsprünge andererseits werden durch die Merkmale des Anspruchs 4 gewährleistet.

Damit alle Rastnasen eine einwandfreie und von der Fläche her ausreichende Abstützung an den Haltevorsprüngen finden, sind nach der Erfindung die Merkmale des Anspruchs 5 vorgesehen.

Die Kontaktflächen der Haltevorsprünge und der Rastnasen können entsprechend den Merkmalen des Anspruchs 6 gestaltet sein. Diese Ausführungsform läßt unter Berücksichtigung der Schmiedetoleranzen den in Richtung der Querebene eingehängten Verbindungsbügeln ein ausreichendes Spiel auch in der vertikalen Richtung, um sich der Reifenoberfläche anpassen zu können. Eine demgegenüber günstigere Kraftübertragung von den Verbindungsbügeln auf die Platten bzw. von den Platten über die Haltevorsprünge, die Rastnasen auf die Verbindungsbügel wird unter Benutzung der Merkmale des Anspruchs 7 erzielt. Es handelt sich hierbei um eine kalottenartige Abstützung, die gegebenenfalls auch in Längsrichtung der Haltevorsprünge gewölbt sein kann.

Zur Gewährleistung eines einwandfreien Schmiedevorgangs genügt es, wenn die den Querebenen abgewandten Seitenwände der Stabilisierungsstege entsprechend den Merkmalen des Anspruchs 8 gestaltet werden.

In Verbindung mit der besonderen Formgebung der Stabilisierungsstege müssen die Merkmale des Anspruchs 9 gesehen werden. Auf diese Weise wird nicht nur ein leichtes und problemloses Einfädeln der Verbindungsbügel ermöglicht, sondern auch sichergestellt, daß die im Rundungstiefsten der Verbindungsbügel zur Anlage gelangenden Haltebügel eines benachbarten Grundkörpers exakt in der Querebene liegen. Damit ist eine gleichmäßige Krafteinleitung bzw. ein einwandfreier Kraftfluß ohne schädliche Hebelarmbildung gewährleistet. Die S-förmigen Schenkel sind stets den Haltebügeln benachbart.

Besonders vorteilhaft sind dann in diesem Zusammenhang die Merkmale des Anspruchs 10.

Die Maßnahme gemäß Anspruch 11 trägt ebenfalls dazu bei, daß der Kraftfluß im Grundkörper ohne schädliche Hebelarmbildung gewahrt bleibt. Die Länge insbesondere der äußeren Schenkelabschnitte kann in Relation zu den schräg verlaufenden Längenabschnitten im wesentlichen identisch bemessen sein. In Abhängigkeit von der Größe der Reifen- und Gleitschutzkette kann es jedoch abweichend hiervon gegebenenfalls zweckmäßig sein, die einzelnen Abschnitte unterschiedlich lang zu gestalten, um die Relationen Grundkörper-Verbindungsbügel in die zweckmäßigen Proportionen zu bringen.

Zwecks einwandfreier Kraftübertragung bei entsprechender Betriebslage sind die Merkmale des Anspruchs 12 vorgesehen.

Unzulässige Hebelarme werden durch die Merkmale des Anspruchs 13 vermieden. Der Kraftfluß geht gleichmäßig in die beiden Platten. Dabei wird eine ausreichende Festigkeit sichergestellt, wenn die Merkmale des Anspruchs 14 verwendet werden.

Das einfache Schmieden des Grundkörpers wird durch die Merkmale des Anspruchs 15 unterstützt.

Eine unnötige Anhäufung von Material ohne die Steifheit des Grundkörpers zu verringern, wird durch die Merkmale des Anspruchs 16 gewährleistet. Dabei wird außerdem darauf geachtet, daß die Übergänge weich gerundet sind. Auch können hierdurch zwei einander benachbarte Grundkörper im Bedarfsfall näher zusammenrücken.

Die Maßnahme gemäß Anspruch 17 dient dem Zweck, ein Verschleißvolumen auf den Laufplatten zu schaffen, welches eine relativ lange Lebensdauer der Kette gewährleistet. Zudem wird auf diese Weise eine gute Traktion sichergestellt. Eine vorzugsweise Gestaltung dieser Ausführungsform verkörpern die Merkmale des Anspruchs 18.

Eine besondere Bedeutung erlangen die Merkmale des Anspruchs 19. Durch die konvexe Gestaltung der sich über die Höhe der pyramidenstumpfförmig gestalteten Laufplatten erstreckenden Kanten wird die Festigkeit der Laufplatten außerordentlich erhöht, ohne daß hierzu mehr Material eingesetzt werden müßte. Die konkave Gestaltung der Längsseiten kann sich bis in die Kopfflächen der Laufplatten hin auswirken. Die Kopfflächen sind im Hinblick auf den Schneidevorgang dachartig abgeschrägt. Die Firsten verlaufen in den Längsebenen der Grundkörper.

Sowohl aus optischen als auch aus Festigkeitsgründen sind die Merkmale des Anspruchs 20 vorgesehen. Beispielsweise kann sich jede Höhenkante aus vier unterschiedlichen Radien zusammensetzen, von denen die kleinsten Radien den Übergang in die Außen- bzw. Innenseiten der Laufplatten bilden.

Eine bessere Verbindung der Haltebügel, insbesondere mit den Laufplatten, wird in der Maßnahme des Anspruchs 21 gesehen. Dabei gehen in den Längsebenen die Haltebügel über nahezu die gesamte Höhe in die Laufplatten hinein. Der Kraftfluß wird günstiger gestaltet.

Eine besonders vorteilhafte Ausführungsform des erfindungsgemäßen Grundgedankens verkörpern die Merkmale des Anspruchs 22. Die Einbettung von Sicherungsblöcken in Aussparungen zwischen den Stabilisierungsstegen und den mit Abstand benachbarten Haltevorsprüngen stellt selbst dann noch den Zusammenhalt der Verbindungsbügel mit den Grundkörpern und damit die Funktion der gesamten Reifen- und Gleitschutzkette sicher, wenn durch den nicht zu vermeidenden Verschleiß der Rundungen der Verbindungsbügel an den Haltebügeln deren Dicke auf ein Mindestmaß geschrumpft ist.

In der Regel genügt es gemäß Anspruch 23, wenn die Sicherungsblöcke an den Auflageplatten festgelegt sind. Für den Dauergebrauch ist es jedoch vorteilhafter, wenn die Merkmale des Anspruchs 24 benutzt werden. Zum Herauslösen der Sicherungsblöcke können auch auf Baustellen stets vorhandene zungenartige Werkzeuge, wie zum Beispiel Schraubendreher etc., verwendet werden. .

Die der einwandfreien Lage der Sicherungsblöcke dienenden Ansätze nach Anspruch 25 sind so angeformt, daß eine Stirnseite der Sicherungsblöcke an den Innenflächen der Laufplatten zur Anlage kommt und die Ansätze die Innenflächen der Auflageplatten seitlich übergreifen.

Die Ansätze können gemäß dem Merkmal des Anspruchs 26 gestaltet sein. Hierbei handelt es sich bevorzugt um nockenartige Ansätze mit einem trapezförmigen Querschnitt.

Eine andere Ausführungsform beschreibt Anspruch 27. Die keilförmigen Klemmnasen erstrecken sich hierbei über einen wesentlichen Teil der Länge der Sicherungsblöcke. Lediglich die horizontal abstehenden Unterseiten der Klemmnasen fassen dann über die Innenflächen der Auflageplatten. Der Keilwinkel kann zum Beispiel 10° betragen.

Schließlich ist es auch denkbar, die Ansätze entsprechend dem Merkmal des Anspruchs 28 auszubilden. Die Federleisten sind hierbei bevorzugt aus dem Material der Sicherungsblöcke gebildet und beispielsweise durch eine entsprechende Schnittführung aus den Seitenbereichen der Sicherungsblöcke herausgetrennt. Sie können unter einem Winkel von etwa 10° seitlich abgestellt sein.

Gemäß Anspruch 29 können die Sicherungsblöcke aus Vollmaterial bestehen. In diesem Zusammenhang finden bevorzugt nockenartige Ansätze oder Federleisten Verwendung.

Sind die Sicherungsblöcke gemäß dem Merkmal des Anspruchs 30 gestaltet, sieht eine bevorzugte Ausführungsform die Verwendung von Keilnasen vor. Indessen können auch bei U-förmigen Sicherungsblöcken nockenartige Ansätze oder Federleisten Verwendung finden.

Der Querschnitt der Sicherungsblöcke sowie der Aussparungen in den Auflageplatten kann nach Anspruch 31 in Abhängigkeit der jeweiligen Erfordernisse rechteckig, quadratisch, oval oder rund sein. Die rechteckige Ausbildung hat den Vorteil, daß große Anlageflächen vorhanden sind. Die Aussparungen erstrecken sich bevorzugt parallel zu den Querebenen der Grundkörper.

Da die Sicherungsblöcke nahezu beanspruchungsfrei sind, können sie aus einem Material hergestellt werden, das vergleichsweise einfach ist. Hierzu dienen beispielsweise die Merkmale des Anspruchs 32. Die Sicherungsblöcke sollten jedoch so hitzebeständig sein, daß auch ein Betrieb in zum Beispiel heißer Asche keine Probleme mit sich bringt.

Die Haftung der Grundkörper an der Reifenoberfläche wird durch die Merkmale des Anspruchs 33 verbessert. Hierbei können sowohl die Ausnehmungen als auch die Antischlupf-Einsätze im Grunde beliebig gestaltet sein. Es ist lediglich sicherzustellen, daß eine ausreichende Griffigkeit vorhanden ist.

Vorteilhaft sind auch die Merkmale des Anspruchs 34. Diese ermöglichen nicht nur eine schmiedetechnisch günstigere Gestaltung, sondern auch eine gute Einbettung der Antischlupf-Einsätze.

Es wird angestrebt, die Kontaktflächen der Antischlupf-Einsätze so groß wie möglich zu halten. Bevorzugt entspricht die Größe den Merkmalen des Anspruchs 35.

Die Tiefe der Ausnehmungen ist so zu bemessen, daß die Antischlupf-Einsätze einen ausreichenden Halt haben. Hierzu kann beispielsweise das Merkmal des Anspruchs 36 vorteilhaft angewendet werden.

Zur Gewährleistung eines einfachen Schmiedeverfahrens dienen die Merkmale der Ansprüche 37 und 38.

Eine lange Standzeit der Antischlupf-Einsätze wird durch die Merkmale des Anspruchs 39 sichergestellt.

Die Griffigkeit der Antischlupf-Einsätze an der Reifenoberfläche wird durch das Merkmal des Anspruchs 40 verbessert. Die Profilierung kann beliebig sein.

Mit Rücksicht darauf, daß unter Umständen in heißer Asche gearbeitet werden muß, können die Antischlupf-Einsätze die Merkmale des Anspruchs 41 aufweisen. Der verwendete Kunststoff, der auch durch einen Kunstkautschuk mit ähnlichen Eigenschaften ersetzt werden kann, sollte eine Temperatur bis ungefähr 350 °C aushalten können. Die Shore-Härte der Einsätze sollte höher liegen als diejenige des Reifens, auf den die Reifen- und Gleitschutzkette aufgezogen wird.

Die Befestigung der Anti-Schlupf-Einsätze in den Ausnehmungen kann auf verschiedene Art und Weise erfolgen. Bevorzugt geschieht dies jedoch durch Einvulkanisieren gemäß dem Merkmal des Anspruchs 42.

In besonders gelagerten Einsatzfällen können entsprechend dem Merkmal des Anspruchs 43 die Antischlupf-Einsätze und die Sicherungsblöcke einstückig gefertigt sein.

Die Erfindung ist nachfolgend anhand von in den Zeichnungen dargestellten Ausführungsbeispielen näher erläutert. Es zeigen :

Figur 1 in der Draufsicht einen Ausschnitt auf eine Reifen- und Gleitschutzkette ;

Figur 2 in vergrößertem Maßstab eine Seitenansicht auf einen Grundkörper der Reifen- und Gleitschutzkette der Figur 1 ;

Figur 3 einen horizontalen Längsschnitt durch den Grundkörper der Figur 2 gemäß der Linie III-III ;

Figur 4 eine Draufsicht auf den Grundkörper der Figur 2 ;

Figur 5 eine Stirnansicht auf den Grundkörper der Figur 2 in Richtung des Pfeils V ;

Figur 6 einen vertikalen Querschnitt durch die Laufplatte des Grundkörpers der Figur 4 gemäß der Linie VI-VI ;

Figur 7 in der Seitenansicht, teilweise im Schnitt, einen Grundkörper gemäß den Figuren 1 bis 6 mit eingehängten Verbindungsbügeln ;

Figur 8 einen vertikalen Querschnitt durch die Anordnung der Figur 7 gemäß der Linie VIII-VIII ;

Figur 9 eine Stirnansicht auf die Anordnung der Figur 7 in Richtung des Pfeils IX ;

Figur 10 einen horizontalen Längsschnitt durch die Anordnung der Figur 7 gemäß der Linie X-X ;

Figur 11 eine Draufsicht auf einen Verbindungsbügel ;

Figur 12 eine Seitenansicht des Verbindungsbügels der Figur 11 ;

Figur 13 einen vertikalen Querschnitt durch die Schenkel des Verbindungsbügels der Figur 11 ;

Figur 14 einen vertikalen Längsschnitt durch den Verbindungsbügel der Figur 11 im Bereich des Krümmungsabschnitts ;

Figur 15 in vergrößertem Maßstab einen Sicherungsblock in der Seitenansicht ;

Figur 16 den Sicherungsblock der Figur 15 in der Stirnansicht ;

Figur 17 in der Seitenansicht eine weitere Ausführungsform eines Sicherungsblocks ;

Figur 18 eine Stirnansicht auf den Sicherungsblock der Figur 17 ;

Figur 19 eine dritte Ausführungsform eines Sicherungsblocks in der Seitenansicht und

Figur 20 eine Stirnansicht auf den Sicherungsblock der Figur 19.

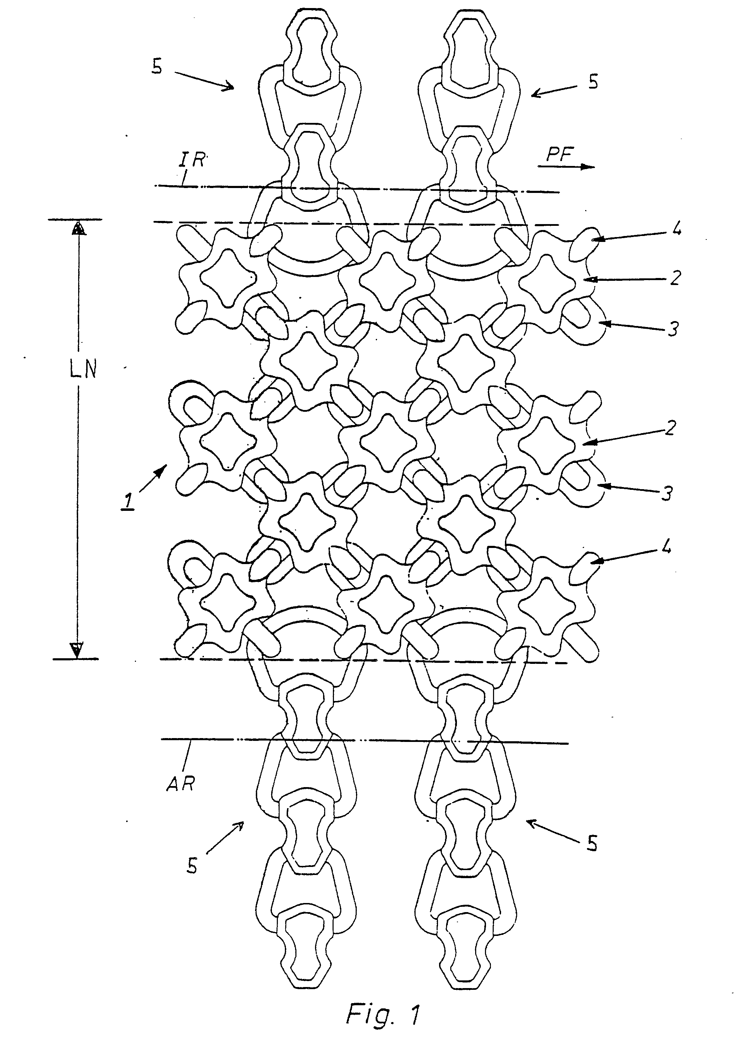

Die in der Figur 1 veranschaulichte Reifen- und Gleitschutzkette 1 besitzt im Bereich des Laufnetzes LN mehrere gleichförmig ausgebildete Grundkörper 2, die über U-förmige Verbindungsbügel 3 zu einem Verbund zusammengesetzt sind. Die Verbindungsbügel 3 greifen an U-förmigen Haltebügeln 4 der Grundkörper 2 an.

Der innere Rand IR und der äußere Rand AR der Reifenlauffläche sind durch strichpunktierte Linien angedeutet. Man erkennt, daß im Bereich der inneren Reifenkante IR das Laufnetz LN etwas zur Reifenmitte zurücksteht, während im Bereich der äußeren Reifenkante AR das Laufnetz LN ein größeres Stück zur Mitte hin zurücksteht. Dieses deshalb, weil bei eintretendem Lochlaibungsverschleiß im Laufnetz LN mittels außenseitig angebrachter Federspannvorrichtung die Kette 1 so nachgespannt werden kann, daß das Laufnetz LN nicht über die Reifenseitenkanten IR bzw. AR hinausragen kann.

Auf beiden Seiten des Laufnetzes LN der Kette 1 schließen sich als Radialketten ausgebildete Stoßfänger 5 an.

In Figur 1 ist die Laufrichtung des Reifens durch einen Pfeil PF kenntlich gemacht. Man sieht, daß die Grundkörper 2, die im wesentlichen einen quadratischen Grundriß aufweisen, derart orientiert sind, daß ihre Diagonalen parallel- bzw. senkrecht zur Laufrichtung PF liegen.

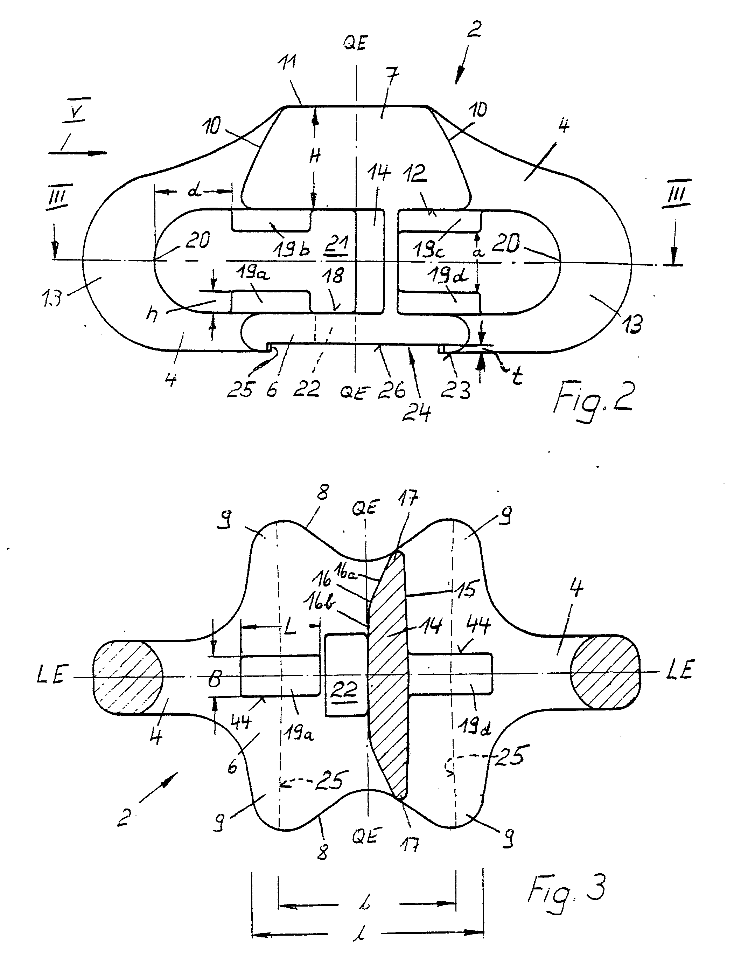

Jeder Grundkörper 2 weist eine Reifenauflageplatte 6 und eine dazu mit parallelem Abstand angeordnete Laufplatte 7 auf (siehe Figuren 2 bis 6). Es ist zu erkennen, daß die Laufplatte 7 etwa 2 1/2 mal so dick wie die Auf-lageplatte 6 bemessen ist. Die Längsseiten 8 der Auflageplatten 6 sind im Bereich der vertikalen Querebene QE des Grundkörpers 2 konkav ausgenommen. Die sich dadurch ergebenden Vorsprünge 9 an der Auflageplatte 6 haben einen Radius von etwa 8 mm.

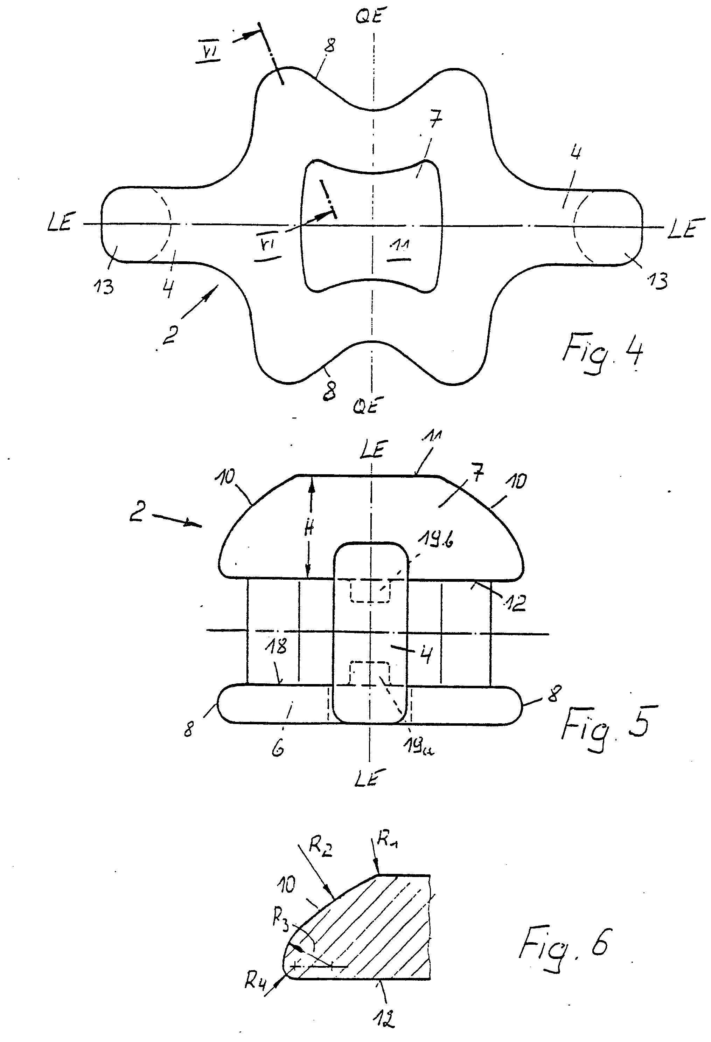

Die Laufplatte 7 ist weitgehend pyramidenstumpfförmig mit sich über die Höhe H konvex erstreckenden, abgerundeten Kanten 10 gestaltet. Es ist insbesondere der Figur 4 zu entnehmen, daß die konkaven Ausnehmungen der Längsseiten 8 sich auch in der Laufplatte 7 fortsetzen. Die Figuren 5 und 6 zeigen, daß die Höhenkanten 10 aus mehreren Radienabschnitten mit unterschiedlichen Radien $R_1$ bis $R_4$ zusammengesetzt sind. So geht jede Höhenkante 10 von der dachartig gestalteten Außenseite 11, welche von der vertikalen Längsebene LE des Grundkörpers 2 unter einem Winkel von etwa 1,5° zu den Seiten hin abfällt, zunächst über einen Radius $R_1$ von 2 mm in einen Radius $R_2$ von 100 mm über geht, der dann wiederum in einen Radius $R_3$ von 12 mm wechselt, welcher schließlich in einen Radius $R_4$ von 3 mm übergeht, der in die Innenseite 12 der Laufplatte 7 mündet.

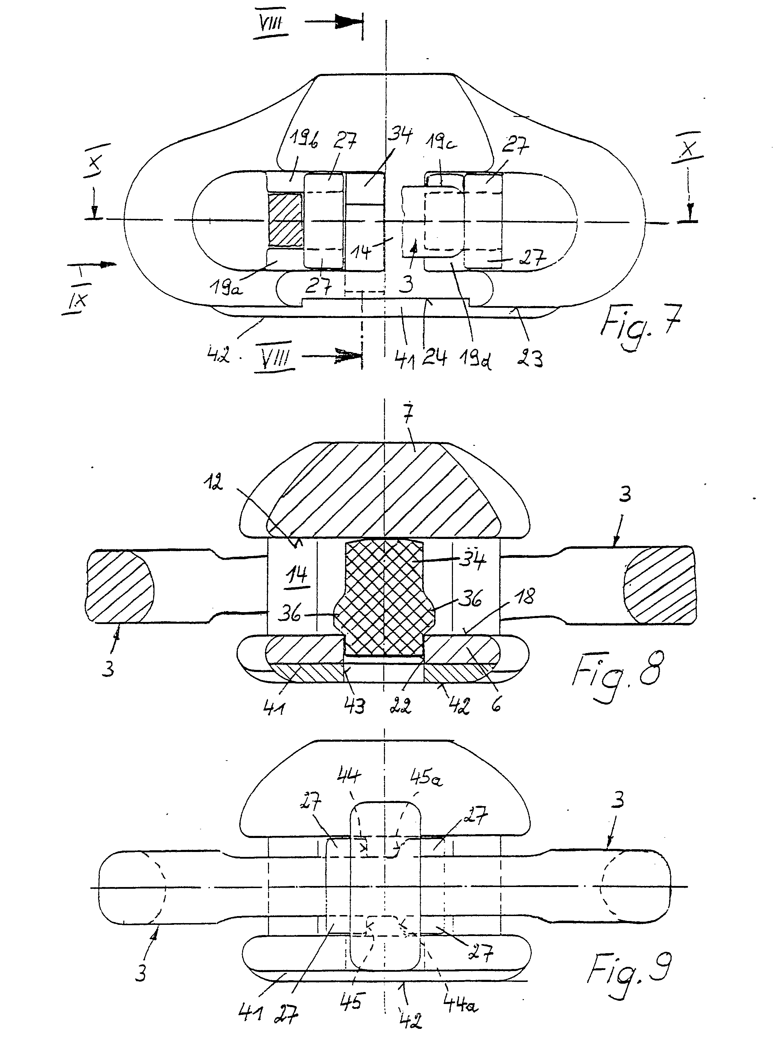

Den Figuren 1 bis 5 ist ferner zu entnehmen, daß Laufplatte 7 und Auflageplatte 6 durch zwei U-förmige Haltebügel 4 miteinander einstückig verbunden sind. Die Haltebügel 4 liegen beide in der vertikalen Längsebene LE des Grundkörpers 2. Die Rundungen 13 der Haltebügel 4 sind nach Art der Rundungen von Rundkettengliedern gestaltet, um in der aus Figur 1 ersichtlichen Weise das Einhängen und Kuppeln mit nachstehend an-hand der Figuren 7 bis 14 noch näher erläuterten Verbindungsbügeln 3 zu ermöglichen. Dabei sind die Rundungen 13 bewußt überdimensioniert, um durch Materialanhäufung die Standzeit zu verlängern.

Aus den Figuren 2 und 3 ist erkennbar, daß die Haltebügel 4 sowohl in die Auflageplatte 6 als auch in die Laufplatte 7 konturenangepaßt übergehen. Es sind sanfte gleichmäßige Krümmungen vorhanden. Auch die Kanten sind sämtlich abgerundet. Der einwandfreie Kraftfluß ist gewährleistet.

Laufplatte 7 und Auflageplatte 6 sind außerdem durch einen Stabilisierungssteg 14 miteinander verbunden, der parallel zur vertikalen Querebene QE des Grundkörpers 2 angeordnet ist. Der Stabilisierungssteg 14 besitzt Seitenwände 15, 16, welche — ausgehend von der Längsebene LE — zu den freien abgemendeten Enden 17 hin konvergieren. Dabei divergiert die etwa in der vertikalen Querebene QE verlaufende Seitenwand 16 zu beiden Seiten der Längsebene LE auf einem Teil 16a unter einem Winkel von etwa 30° und mit dem restlichen Längenabschnitt 16b unter einem Winkel von etwa 1,5° zu der Querebene QE in Richtung auf die Längsseiten 8. Die andere Seitenwand 15 konvergiert in Richtung auf die Längsseiten 8, und zwar ausgehend von der Längsebene LE jeweils unter einem Winkel von etwa 1,5°.

Auf der Innenseite 12 der Laufplatte 7 und der Innenseite 18 der Auflageplatte 6 sind in der Längsebene LE sich erstreckende Haltevorsprünge 19a bis 19d vorgesehen. Die Haltevorsprünge 19a bis 19d haben einen im wesentlichen rechteckigen Querschnitt, wobei ihre Länge L etwa doppelt so groß wie ihre Breite B bemessen ist (Figur 3). Die Höhe h (Figur 2) der Haltevorsprünge 19a bis 19d entspricht etwa der halben Breite B. Auf jeder Seite der Querebene QE liegen sich somit jeweils zwei Haltevorsprünge 19a, 19b bzw. 19c, 19d in der Längsebene LE einander gegenüber. Der Abstand a sowohl der der Reifenauflageplatte 6 als auch der der Laufplatte 7 zugeordneten Haltevorsprünge 19a, 19d bzw. 19b, 19c voneinander ist gleich dem Abstand d der Haltevorsprünge 19a bis 19d vom Rundungstiefsten 20 des jeweils benachbarten Haltebügels 4 bemessen (Figuren 2 und 3).

Während die Haltevorsprünge 19c und 19d unmittelbar mit der Seitenwand 15 des Stabilisierungsstegs 14 verbunden sind, weisen die Haltevorsprünge 19a und 19b einen Abstand zum Stabilisierungssteg 14 auf. In diesem kanalartigen Bereich 21 ist eine rechteckige Aussparung 22 in die Auflageplatte 6 eingearbeitet, welche zur Aufnahme eines nachstehend anhand der Figuren 7 bis 10 und 15 bis 20 noch erläuterten Sicherungsblocks dient.

Die Außenseite 23 der Auflageplatte 6 besitzt eine rinnenartig gestaltete Ausnehmung 24, welche sich in Richtung der Querebene QE erstreckt und in die Längsseiten 8 mündet. Die Breite b der rinnenartigen Ausnehmung 24 ist geringfügig kleiner als die Länge 1 der Auflageplatte 6 bemessen. Ihre Tiefe t beträgt etwa 1,5 mm. Die Seitenwände 25 der Ausnehmung 24 divergieren beiderseits der Längsebene LE in Richtung auf die Längsseiten 8 unter einem Winkel von etwa 1,5°. Der Boden 26 der rinnenartigen Ausnehmung 24 ist unter einem Winkel von annähernd 1,5° dachartig gestaltet. Die Firste des Dachs verläuft in der Längsebene LE.

Aus den Figuren 7 bis 10 ist erkennbar, daß jeder Haltevorsprung 19a bis 19d von jeweils einer Rastnase 27 eines im wesentlichen U-förmig gestalteten Verbindungsbügels 3 hintergriffen ist (s. auch Figuren 11 bis 14). Um den einwandfreien Sitz der Rastnasen 27 zu sichern, ist deren Länge e (siehe Figur 12) etwa gleich der Höhe h (Figur 2) der Haltevorsprünge 19a bis 19d und die Länge L der Haltevorsprünge 19a bis 19d (Figur 3) etwa gleich der doppelten Dicke f (Figur 13) eines Verbindungsbügelschenkels 28 oder 29 bemessen.

Insbesondere die Figuren 11 bis 14 zeigen, daß der Schenkel 28 der U-förmigen Verbindungsbügel 3 gerade ausgebildet und der andere Schenkel 29 S-förmig gekrümmt ist. Der S-förmige Schenkel 29 setzt sich aus drei Längenabschnitten 30, 31 und 32 zusammen, von denen die äußeren Längenabschnitte 30 und 32 parallel zu dem geraden Nachbarschenkel 28 verlaufen und durch den schräg angeordneten Längenabschnitt 31 miteinander verbunden sind. Die beiden äußeren Längenabschnitte 30 und 32 sind außerdem um etwa die Dicke f eines Schenkels 28 oder 29 quer zueinander versetzt. Die Dicke f der Schenkel 28, 29 ist hierbei etwa gleich 2/3 ihrer Höhe g (Figur 12) bemessen. Die Rastnasen 27 erstrecken sich in der vertikalen Längsebene der Schenkel 28 bzw. der Schenkellängenabschnitte 32. Dabei entspricht die Länge e der Rastnasen 27 etwa der halben Breite k (Figur 11) bzw. ihrer halben Dicke m (Figur 11).

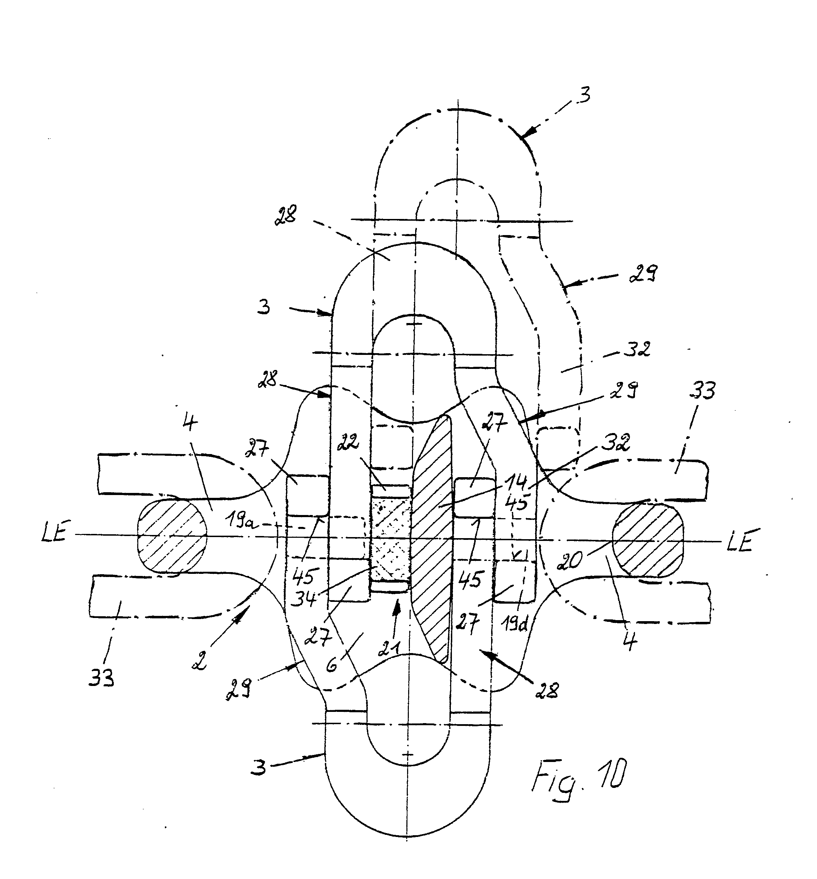

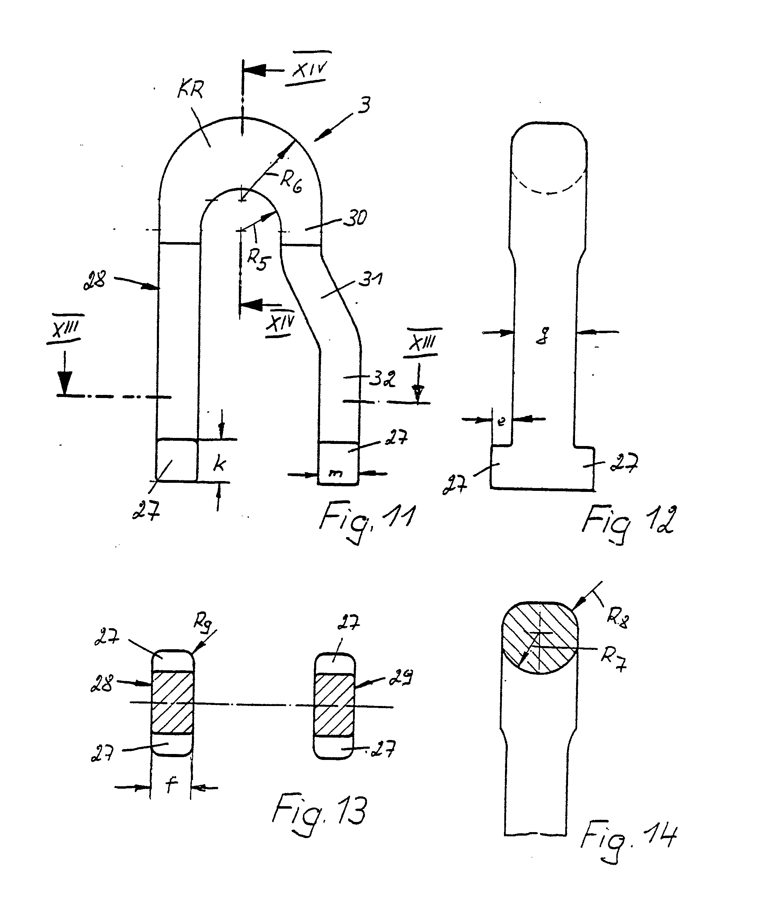

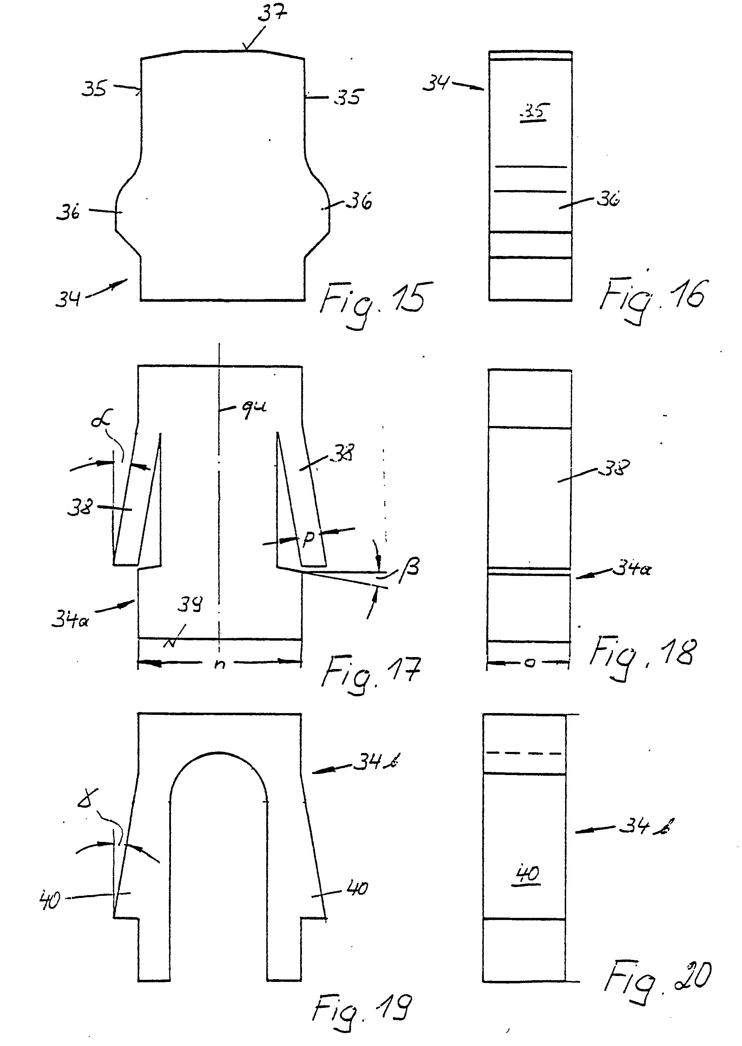

In der Figur 10 ist in Vollinien ein horizontal längsgeschnittener Grundkörper 2 veranschaulicht, mit zwei eingehängten Verbindungsbügeln 3. In strichpunktierter Linienführung sind außerdem die Endabschnitte 33 von zwei Verbindungsbügeln 3 eingezeichnet, die zu benachbarten Grundkörpern 2 gehören und in die Haltebügel 4 eingehängt sind. Des weiteren ist in der oberen Bildhälfte in strichpunktierter Linienführung ein Verbindungsbügel 3 vor dem Einhängen in den Grundkörper 2 dargestellt. Es ist zu erkennen, daß der gerade Schenkel 28 beim Einführen durch den kanalartigen Bereich 21 zwischen den Haltevorsprüngen 19a und 19b und dem Stabilisierungssteg 14 bewegt wird, wohingegen der Endabschnitt 32 des S-förmig gekrümmten Schenkels 29 zwischen dem Rundungstiefsten 20 des Haltebügels 4 und den anderen Haltevorsprüngen 19c und 19d entlanggeführt wird. Ist der Verbindungsbügel 3 so weit eingeschoben, daß die Rastnasen 27 hinter die Haltevorsprünge 19a bis 19d gleiten können, wird der Verbindungsbügel 3 seitlich verschoben. Er nimmt dann die in Vollinien in Figur 10 gezeichnete Stellung ein. Bevor jedoch dieser Verbindungsbügel 3 eingeführt werden kann, ist es erforderlich, den anderen Verbindungsbügel 3 einzuführen. Dieser wird zunächst mit dem S-förmig gekrümmten Schenkel 29 durch den kanalartigen Bereich 21 und mit dem geraden Schenkel 28 durch den Bereich zwischen den Haltevorsprüngen 19c und 19d und dem Rundungstiefsten 20 geführt und dann seitlich verschoben. Haben die beiden Verbindungsbügel 3 die gezeichnete Lage erreicht und sind die Verbindungsbügel 3 der benachbarten Grundkörper 2 eingehängt, ist eine seitliche Verlagerung der Verbindungsbügel 3 nicht mehr möglich. Sie sind in ihrer Lage fixiert.

Beim Ausführungsbeispiel ist das Verhältnis $R_5$ zu $R_6$ des Krümmungsbereichs KR des Verbindungsbügels 3 etwa wie 1 : 2 (zum Beispiel 10 : 20 mm) bemessen. Das Rundungstiefste 20 hat im Querschnitt einen Krümmungsradius $R_7$ von 10 mm (Figur 14). Die Querschnittsradien $R_8$ am Außenumfang betragen zum Beispiel 6 mm, während die Querschnittsradien $R_9$ an den Rastnasen 27 2,5 mm betragen.

Um auch in besonderen Einsatzfällen die Lage der einem Grundkörper 2 zugeordneten Verbindungsbügel 3 sicherzustellen, kann ein Sicherungsblock 34 durch die Aussparung 22 von der Außenseite 23 her eingeschoben werden (Figuren 7 bis 10). Er nimmt dann die aus den Figuren 8 und 10 erkennbare Stellung ein. Der bei der Ausführungsform der Figuren 8 und 10 verwendete Sicherungsblock 34 ist in den Figuren 15 und 16 in vergrößertem Maßstab dargestellt. Dieser Sicherungsblock 34 besteht aus Vollmaterial und weist einen rechteckigen Querschnitt auf. Sein Material ist Silikon-Kunststoff. Er besitzt auf den Stirnseiten 35 nockenartige Vorsprünge 36 mit einem etwa trapezförmigen Querschnitt. Die Kopfseite 37 des Sicherungsblocks 34 ist endseitig leicht dachartig abgeschrägt. Die Festlegung des Sicherungsblocks 34 zwischen der Laufplatte 7 und der Auflageplatte 6 erfolgt in der aus Figur 8 ersichtlichen Weise dadurch, daß die nockenartigen Vorsprünge 36 über die Innenseite 18 der Auflageplatte 6 greifen und dadurch den Sicherungsblock 34 zwischen der Innenseite 12 der Laufplatte 7 und der Innenseite 18 der Auflageplatte 6 festklemmen. In dieser Position des Sicherungsblocks 34 haben die Verbindungsbügel 3 keine Möglichkeit mehr, eine seitliche Ausweichbewegung durchzuführen.

Eine weitere Ausführungsform eines Sicherungsblocks 34a veranschaulichen die Figuren 17 und 18. Hierbei besteht der Sicherungsblock 34a wieder aus Vollmaterial. Werkstoff ist ebenfalls Silikon-Kunststoff. Die Klemmansätze werden in diesem Fall von Federleisten 38 gebildet, die unter einem Winkel α von 10° seitlich ausgestellt sind. Die Dicke p der Federleisten 38 kann bei einer Länge n des Sicherungsblocks 34a von 20 mm und einer Breite o beispielsweise 3 mm betragen. Die Schnittführung zur Erzeugung der Federleisten 38 erfolgt unter einem Winkel β von etwa 10° zur Grundlinie 39 und parallel zur vertikalen Querebene qu.

Im Falle der Ausführungsform der Figuren 19 und 20 ist der Sicherungsblock 34b U-förmig gestaltet. Die Klemmansätze werden jetzt durch keilförmige Klemmnasen 40 gebildet, deren Ausstellwinkel γ etwa 10° beträgt.

Die Figuren 7 bis 9 zeigen ferner einen in die rinnenartige Ausnehmung 24 auf der Außenseite 23 der Auflageplatte 6 einvulkanisierten Antischlupf-Einsatz 41. Der auf der Außenseite 42 vorzugsweise profilierte Antischlupf-Einsatz 41 ist um ein den Reibungsverschleiß berücksichtigendes Maß dicker als die Tiefe t der Ausnehmung 24 bemessen, so daß er über die Außenseite 23 vorsteht. Er besteht aus Silikon-Kunststoff, der hitzebeständig, rutschhemmend und abriebfest ist. Die Kanten des Antischlupf-Einsatzes 41 sind abgerundet und gehen vorsprungslos in die Rundungen der Auflageplatte 6 über. Wie aus Figur 8 ersichtlich, besitzt der Antischlupf-Einsatz 41 eine an die Aussparung 22 in der Auflageplatte 6 angepaßte Durchbrechung 43, um den Sicherungsblock 34 einführen zu können.

In den Figuren 2, 3, 5, 7, 9 linke Bildhälfte und 10 sind die Haltevorsprünge 19a bis 19d sämtlich mit ebenen Längsseitenwänden 44 versehen, die im wesentlichen rechtwinklig zu den Innenseiten 12 und 18 der Platten 6 und 7 verlaufen. Entsprechend eben sind dann auch die mit diesen Seitenflächen 44 der Haltevorsprünge 19a bis 19d in Kontakt gelangenden Stützflächen 45 der Rastnasen 27 ausgebildet. Die Stützflächen 45 können aber auch leicht geneigt sein und mit einer größeren Rundung in die angrenzenden Schenkelabschnitte übergehen.

In der rechten Bildhälfte der Figur 9 ist noch eine Ausführungsform veranschaulicht, bei welcher die Seitenwände 44a der Haltevorsprünge 19a bis 19d konkav gekrümmt und die an ihnen zur Anlage gelangenden Stützflächen 45a der Rastnasen 27 entsprechend konvex gewölbt sind.

Schließlich wäre noch anzuführen, daß auch die Innenseiten 12, 18 der Platten 7, 6 beiderseits von der Längsebene LE unter einem Winkel von etwa 1,5° zu den Längsseiten 8 hin divergieren. Diese Maßnahme stellt in Verbindung mit der restlichen Ausgestaltung des Grundkörpers 2 sicher, daß dieser in einem Gesenk geschmiedet werden kann, das aus einem in der Längsebene LE zusammentreffenden Ober- und Untergesenk besteht.

**Patentansprüche**

1. Reifen- und Gleitschutzkette für gummibereifte Fahrzeuge, insbesondere schwere und schnellfahrende Erdbewegungsmaschinen, die mit im wesentlichen gleichförmig ausgebildeten, auf der Reifenoberfläche mit einer Reifenauflageplatte (6) aufliegenden, vorzugsweise einstückigen und schweißnahtlosen Grundkörpern (2) versehen ist, welche jeweils außer der Reifenauflageplatte (6), eine von dieser durch einen Zwischenraum mit Abstand sowie zu ihr im wesentlichen parallel angeordnete Laufplatte (7) besitzen, wobei sich von der Reifenauflageplatte (6) zur Laufplatte (7) nach außen gebogene, ösenförmige Haltebügel (4) erstrecken, an denen jeweils schäkenähnliche Verbindungsbügel (3) angreifen, die mit benachbarten Grundkörpern verbunden sind, wobei auf den Innenseiten von Reifenauflage- und Laufplatte (6, 7) im Zwischenraum zwischen Reifenauflage- und Laufplatte aufeinander zu gerichtete Haltevorsprünge (19) vorgesehen sind, hinter welche Rastnasen (27) greifen, die an den Schenkelenden der Verbindungsbügel (3) angeordnet sind, und wobei die Haltevorsprünge (4) und die Verbindungsbügel (3) derart ausgebildet und angeordnet sind, daß letztere in einer zur Ebene der Haltebügel (4) etwa senkrechten Ebene liegen und ihre Längsachse mit der Längsachse der Haltebügel einen etwa rechten Winkel bildet, dadurch gekennzeichnet, daß senkrecht zu der gemeinsamen Längsebene der Haltebügel ein Stabilisierungssteg (14) verläuft, der die Reifenauflageplatte (6) mit der Laufplatte (7) verbindet, daß die Seitenwände (15, 16) des in die Längsseiten (8) der Platten (6, 7) mündenden Stabilisierungsstegs (14) — ausgehend von der Längsebene (LE) — zu den freien abgerundeten Enden (17) hin konvergieren, und daß die etwa in der vertikalen Querebene (QE) des Grundkörpers (2) verlaufende Seitenwand (16) des Stabilisierungsstegs (14) zu beiden Seiten der Längsebene (LE) mindestens auf einem Teil (16a) ihrer Länge unter einem Winkel von etwa 30° und mit dem restlichen Längenabschnitt (16b) unter einem Winkel von etwa 1,5° zu der Querebene (QE) in Richtung auf die Längsseiten (8) divergiert.

2. Kette nach Anspruch 1, dadurch gekennzeichnet, daß der Abstand (a) sowohl der der Reifenauflageplatte (6) als auch der der Laufplatte (7) zugeordneten Haltevorsprünge (19a, 19d bzw. 19b, 19c) voneinander etwa gleich dem Abstand (d) der Haltevorsprünge (19a-d) vom Rundungstiefsten (20) der jeweils benachbarten Halteübgel (4) bemessen ist.

3. Kette nach Anspruch 1 und 2, dadurch gekennzeichnet, daß die etwa in der vertikalen Querebene (QE) des Grundkörpers (2) verlaufende Seitenwand des Stabilisierungsstegs (14) in einem Abstand (21) von den ihr benachbarten Haltevorsprüngen (19a, 19b) angeordnet ist, der etwa der Dicke (f) der Verbindungsbügelschenkel (28, 29) entspricht.

4. Kette nach Anspruch 1 oder einem der folgenden Ansprüche, dadurch gekennzeichnet, daß die Höhe (h) der Haltevorsprünge (19a-d) annähernd gleich der Länge (e) der Rastnasen (27) bemessen ist.

5. Kette nach Anspruch 1 oder einem der folgenden Ansprüche, dadurch gekennzeichnet, daß die Länge (L) der Haltevorsprünge (19a-d) etwa der doppelten Dicke (f) eines Verbindungsbügelschenkels (28, 29) entspricht.

6. Kette nach Anspruch 1 oder einem der folgenden Ansprüche, dadurch gekennzeichnet, daß die mit den Stützflächen (45) der Rastnasen (27) in Kontakt gelangenden Seitenwände (44) der Haltevorsprünge (19a-d) eben ausgebildet sind und im wesentlichen rechtwinklig zu den Innenseiten (12, 18) der Platten (7, 6) verlaufen.

7. Kette nach einem der Ansprüche 1 bis 5, dadurch gekennzeichnet, daß die Seitenwände (44a) der Haltevorsprünge (19a-d) konkav gekrümmt und die an ihnen zur Anlage gelangenden Stützflächen (45a) der Rastnasen (27) entsprechend konvex gewölbt sind.

8. Kette nach einem der Ansprüche 1 bis 7, dadurch gekennzeichnet, daß die im Abstand der Dicke des Stabilisierungsstegs (14) von den Querebenen (QE) distanzierte Seitenwand (15) auf beiden Seiten der Längsebene (LE) unter einem Winkel von etwa 1,5° zu der Querebene (QE) in Richtung auf die Längsseiten (8) konvergiert.

9. Kette nach einem der Ansprüche 1 bis 8, dadurch gekennzeichnet, daß ein Schenkel (28) der U-förmigen Verbindungsbügel (3) gerade ausgebildet und der andere Schenkel (29) S-förmig gekrümmt ist.

10. Kette nach Anspruch 9, dadurch gekennzeichnet, daß die S-förmigen Schenkel (29) aus drei Längenabschnitten (30, 31, 32) zusammengesetzt sind, von denen die beiden äußeren Längenabschnitte (30, 32) parallel zu den geraden Nachbarschenkeln (28) verlaufen und durch schräg angeordnete Längenabschnitte (31) verbunden sind.

11. Kette nach Anspruch 10, dadurch gekennzeichnet, daß die beiden äußeren Längenabschnitte (30, 32) um etwa die Dicke (f) eines Schenkels (28, 29) quer zueinander versetzt sind.

12. Kette nach Anspruch 1 oder einem der folgenden Ansprüche, dadurch gekennzeichnet, daß die Dicke (f) der Schenkel (28, 29) etwa gleich 2/3 ihrer Höhe (g) bemessen ist.

13. Kette nach Anspruch 1 oder einem der folgenden Ansprüche, dadurch gekennzeichnet, daß sich die Rastnasen (27) in den vertikalen Längsebenen der Schenkel (28) bzw. der Schenkellängenabschnitte (32) erstrecken.

14. Kette nach Anspruch 13, dadurch gekennzeichnet, daß die Länge (e) der Rastnasen (27) etwa ihrer halben Breite (k) bzw. halben Dicke (m) entspricht.

15. Kette nach einem der Ansprüche 1 bis 10, dadurch gekennzeichnet, daß die Innenseiten (12, 18) der Platten (7, 6) beiderseits von den Längsebenen (LE) unter einem Winkel von etwa 1,5° zu den Längsseiten (8) hin divergieren.

16. Kette nach einem der Ansprüche 1 bis 10 oder 15, dadurch gekennzeichnet, daß die Längsseiten (8) der Platten (6, 7) im Bereich der Querebene (QE) konkav ausgenommen sind.

17. Kette nach einem der Ansprüche 1 bis 10, 15 oder 16, dadurch gekennzeichnet, daß die Laufplatte (7) um ein Mehrfaches dicker als die Auflageplatte (6) bemessen ist.

18. Kette nach Anspruch 17, dadurch gekennzeichnet, daß die Laufplatte (7) etwa 2 bis 3 mal so dick wie die Auflageplatte (6) bemessen ist.

19. Kette nach einem der Ansprüche 1 bis 10 oder 15 bis 18, dadurch gekennzeichnet, daß die Laufplatte (7) pyramidenstumpfförmig mit sich über die Höhe (H) konvex erstreckenden, abgerundeten Kanten (10) gestaltet ist.

20. Kette nach Anspruch 19, dadurch gekennzeichnet, daß die Höhenkanten (10) aus mehreren Radienabschnitten mit unterschiedlichen Radien ($R_1$ bis $R_4$) zusammengesetzt sind.

21. Kette nach Anspruch 1 und 19, dadurch gekennzeichnet, daß die Haltebügel (4) konturenangepaßt in die verdickten Laufplatten (7) übergehen.

22. Kette nach einem der Ansprüche 1 bis 10 oder 15 bis 21, dadurch gekennzeichnet, daß zwischen den Stabilisierungsstegen (14) und den mit Abstand benachbarten Haltevorsprüngen (19a, 19b) Aussparungen (22) in den Auflageplatten (6) vorgesehen sind, welche der Aufnahme von Sicherungsblöcken (34, 34a, 34b) dienen.

23. Kette nach Anspruch 22, dadurch gekennzeichnet, daß die Sicherungsblöcke (34, 34a, 34b) an der Auflageplatte (6) festlegbar sind.

24. Kette nach Anspruch 22, dadurch gekennzeichnet, daß die Sicherungsblöcke (34, 34a, 34b) zwischen der Auflageplatte (6) und der Laufplatte (7) einklemmbar sind.

25. Kette nach Anspruch 22 oder einem der folgenden Ansprüche, dadurch gekennzeichnet, daß die Sicherungsblöcke (34, 34a, 34b) in Richtung der Querebene (QE) vorstehende Ansätze (36, 38, 40) aufweisen.

26. Kette nach Anspruch 25, dadurch gekennzeichnet, daß die Ansätze (36) nockenartig ausgebildet sind.

27. Kette nach Anspruch 25, dadurch gekennzeichnet, daß die Ansätze als keilförmige Klemmnasen (40) gestaltet sind.

28. Kette nach Anspruch 25, dadurch gekennzeichnet, daß die Ansätze als Federleisten (38) geformt sind.

29. Kette nach Anspruch 22 oder einem der folgenden Ansprüche, dadurch gekennzeichnet, daß die Sicherungsblöcke (34, 34a) aus Vollmaterial bestehen.

30. Kette nach einem der Ansprüche 22 bis 28, dadurch gekennzeichnet, daß die Sicherungsblöcke (34b) U-förmig gestaltet sind.

31. Kette nach Anspruch 22 oder einem der folgenden Ansprüche, dadurch gekennzeichnet, daß der Querschnitt der Sicherungsblöcke (34, 34a) und damit auch der Aussparungen (22) in der Auflageplatte (6) rechteckig, quadratisch, oval oder rund ist.

32. Kette nach Anspruch 22 oder einem der folgenden Ansprüche, dadurch gekennzeichnet, daß die Sicherungsblöcke (34, 34a, 34b) aus einem elastisch verformbaren Silikon-Kunststoff bestehen, der außerdem abriebfest und hitzebeständig ist.

33. Kette nach Anspruch 1 oder einem der folgenden Ansprüche, dadurch gekennzeichnet, daß in die Außenseiten (23) der Auflageplatte (6) Ausnehmungen (24) zur Lagerung von Antischlupf-Einsätzen (41) eingearbeitet sind.

34. Kette nach Anspruch 33, dadurch gekennzeichnet, daß die Ausnehmungen (24) rinnenartig gestaltet sind, sich in Richtung der Querebenen (QE) erstrecken und in die Längsseiten (8) der Auflageplatte (6) münden.

35. Kette nach Anspruch 34, dadurch gekennzeichnet, daß die Breite (b) der rinnenartigen Ausnehmungen (24) geringfügig kleiner als die Länge (1) der Auflageplatte (6) bemessen ist.

36. Kette nach Anspruch 34 oder 35, dadurch gekennzeichnet, daß die Tiefe (t) der rinnenartigen Ausnehmungen (24) etwa 1,5 mm beträgt.

37. Kette nach Anspruch 34 oder einem der folgenden Ansprüche, dadurch gekennzeichnet, daß die Seitenwände (25) der rinnenartigen Ausnehmungen (24) beiderseits der Längsebene (LE) in Richtung auf die Längsseiten (8) der Auflageplatte (6) unter einem Winkel von etwa 1,5° divergieren.

38. Kette nach Anspruch 34 oder einem der folgenden Ansprüche, dadurch gekennzeichnet, daß die Böden (26) der rinnenartigen Ausnehmungen (24) unter einem Winkel von annähernd 1,5° dachartig gestaltet sind.

39. Kette nach Anspruch 33, dadurch gekennzeichnet, daß die Antischlupf-Einsätze (41) um ein den Reibungsverschleiß berücksichtigendes Maß dicker als die Tiefe (t) der Ausnehmungen (24) bemessen sind.

40. Kette nach Anspruch 33 oder 39, dadurch gekennzeichnet, daß die Antischlupf-Einsätze (41) auf den Außenseiten (42) profiliert sind.

41. Kette nach Anspruch 33, 39 oder 40, dadurch gekennzeichnet, daß die Antischlupf-Einsätze (41) aus einem Silikon-Kunststoff bestehen, der hitzebeständig, rutschhemmend und abriebfest ist.

42. Kette nach Anspruch 33 oder einem der Ansprüche 39 bis 41, dadurch gekennzeichnet, daß die Antischlupf-Einsätze (41) in die Ausnehmungen (24) einvulkanisiert sind.

43. Kette nach Anspruch 22 und 33, dadurch gekennzeichnet, daß die Antischlupf-Einsätze (41) mit den Sicherungsblöcken (34, 34a) einstückig ausgebildet sind.

**Claims**

1. A tyre and skid protection chain for rubber-tyred vehicles, more particularly heavy fast earthmoving machinery, the chain having substantially uniform, preferaby unitary and seamless, basic members (2) which engage with the tyre surface by way of a tyre plate (6) and which each have outside the same a running plate (7) disposed at a distance from and substantially parallel to the tyre plate (6), outwardly bent eye-like or loop-like retaining stirrups (4) extending from the tyre plate (6) to the running plate (7), the stirrups (4) each being engaged by shackle-like connecting stirrpus (3) connected to adjacent basic members (2), the insides of the tyre plate (6) and running plate (7) having on them in the gap between them retaining projections (19) which extend towards one another and behind which catch projections (27) engage, the catch projections (27) being disposed on the arm ends of the connecting stirrups (3), the same and the retaining projections (4) being so devised that the stirrups (3) are disposed in a plane substantially perpendicular to the plane o the retaining stirrups (4) and the longitudinal axis of the connecting stirrups is substantially at right-angles to the longitudinal axis of the retaining stirrups, characterised in that a stabilizing web (14) extends perpendicularly to the common longitudinal plane of the retaining stirrups (4) and interconnects the tyre plate (6) to the running plate (7), the side walls (15, 16) of the stabilizing web (14) which, starting from the longitudinal plane (LE), extends into the longitudinal sides (8) of the tyre plate (6) and running plate (7), converge towards the free rounded ends (17), and the stabilizing web side wall (16) extending substantially in the vertical transverse plane (QE) of the basic member (2) diverges from the transverse plane (QE) towards the longitudinal sides (8) on both sides of the longitudinal plane (LE) at an angle of approximately 30° over at least a portion (16a) of its length and at an angle of approximate 155° over the remainder (16b) of its length.

2. A chain according to claim 1, characterised in that the distance (a) between the retaining projections (19a, 19d) associated with the tyre plate (6) and the distance between the retaining projections (19b, 19c) associated with the running plate (7) are each approximately equal to the distance (d) between the retaining projections (19a-d) and the mid-point (20) of the curved part of the adjacent retaining stirrup (4).

3. A chain according to claim 1 and 2, characterised in that the stabilizing web side wall (16) which extends substantially in the vertical transverse plane (QE) of the basic member (2) is spaced apart from the retaining projections (19a, 19b) adjacent it by a distance (21) corresponding approximately to the thickness (f) of the arms (28, 29) of the connecting stirrups.

4. A chain according to claim 1 or any of the following claims, characterised in that the height (h) of the retaining projections (19a-d) is substantially equal to the length (e) of the catch projections (27).

5. A chain according to claim 1 or any of the following claims, characterised in that the length (L) of the retaining projections (19a-d) corresponds approximately to twice the thickness (f) of a connecting stirrup arm (28, 29).

6. A chain according to claim 1 or any of the following claims, characterised in that those side walls (44) of the retaining projections (19a-d) which engage the bearing surfaces (45) of the projections (27) are plane and extend substantially at right-angles to the insides (12, 18) of the plates (7, 6).

7. A chain according to any claims 1-5, characterised in that the side walls (44a) of the retaining projections (19a-d) have a concave curvature and those bearing surfaces (45a) of the projections (27) which engage such walls have a corresponding convex curvature.

8. A chain according to any of claims 1-7, characterised in that the side wall (15) spaced apart from the transverse planes (QE) by the thickness of the stabilizing web (14) converges at an angle of approximately 1.5° to the transverse plane (QE) towards the longitudinal sides (8) on both sides of the longitudinal plane (LE).

9. A chain according to any of claims 1-8, characterised in that one arm (28) of the U-shaped connecting stirrup (3) is straight and the other arm (29) is S-shaped.

10. A chain according to claim 9, characterised in that the S-shaped arms (29) are combined from three longitudinal parts (30, 31, 32), the two outer parts (30, 32) of which extend parallel to the straight adjacent arms (28) and are interconnected by inclined longitudinal parts (31).

11. A chain according to claim 10, characterised in that the two outer longitudinal parts (30, 32) are offset transversely from one another approximately by the thickness (f) of an arm (28, 29).

12. A chain according to claim 1 or any of the following claims, characterised in that the thickness (f) of the arms (28, 29) is approximately two-thirds of their height (g).

13. A chain according to claim 1 or any of the following claims, characterised in that the projections (27) extend in the vertical longitudinal planes of the arms (28) or parts (32).

14. A chain according to claim 13, characterised in that the length (e) of the projections (27) is approximately half their width (k) or half their thickness (m).

15. A chain according to any of claims 1-10, characterised in that the insides (12, 18) of the plates (7, 6) diverge at an angle of approximately 1.5° towards the longitudinal sides (8) on both sides of the longitudinal planes (LE).

16. A chain according to any of claims 1-10 or 15, characterised in that the longitudinal sides (8) of the plates (6, 7) are formed with a concavity near the transverse plane (QE).

17. A chain according to any of claims 1-10, 15 or 16, characterised in that the running plate (7) is several times thicker than the tyre plate (6).

18. A chain according to claim 17, characterised in that the running plate (7) is approximately two to three times as thick as the tyre plate (6).

19. A chain according to any of claims 1-10 or 15 to 18, characterised in that the running plate (7) in shape resembles a truncated pyramid having rounded edges (10) which extend convexly over the height (h).

20. A chain according to claim 19, characterised in that the edges (10) are combined from a number of radial parts having different radii ($R_1$ to $R_4$).

21. A chain according to claims 1 and 19, characterised in that the retaining stirrups (4) merge into the thickened running plates (7) with contour adaptation.

22. A chain according to any of claims 1-10 or 15-21, characterised in that the tyre plates (6) are formed with recesses (22) which are disposed between the webs (14) and the spaced-apart projections (19a, 19b), the recesses (22) being operative to receive securing blocks (34, 34a, 34b).

23. A chain according to claim 22, characterised in that the securing blocks (34, 34a, 34b) can be secured to the tyre plate (6).

24. A chain according to claim 22, characterised in that the securing blocks (34, 34a, 34b) are clampable between the tyre plate (6) and the running plate (7).

25. A chain according to claim 22 or any of the following claims, characterised in that the securing blocks (34, 34a, 34b) have projections (36, 38, 40) which project towards the transverse plane (QE).

26. A chain according to claim 25, characterised in that the projections (36) are cam-like.

27. A chain according to claim 25, characterised in that the projections take the form of wedge-shaped clamping projections (40).

28. A chain according to claim 25, characterised in that the projections are shaped as spring strips (38).

29. A chain according to claim 22 or any of the following claims, characterised in that the securing blocks (34, 34a) are made of solid material.

30. A chain according to any of claims 22-28, characterised in that the securing blocks (34b) are U-shaped.

31. A chain according to claim 22 or any of the following claims, characterised in that the cross-section of the securing blocks (34, 34a) and, therefore, of the recesses (22) in the tyre plate (6) is rectangular or square or oval or round.

32. A chain according to claim 22 or any of the following claims, characterised in that the securing blocks (34, 34a, 34b) are made of a resiliently deformable silicone plastics which is also abrasion-resistant and heat-resistant.

33. A chain according to claim 1 or any of the following claims, characterised in that the outsides (23) of the tyre plate (6) are formed with recesses (24) to receive non-slip inserts (41).

34. A chain according to claim 33, characterised in that the recesses (24) are trough-like and extend in the direction of the transverse planes (QE) to terminate in the longitudinal sides (8) of the tyre plate (6).

35. A chain according to claim 34, characterised in that the width (b) of the trough-like recesses (24) is slightly less than the length (1) of the tyre plate (6).

36. A chain according to claim 34 or 35, characterised in that the depth (t) of the trough-like recesses (24) is approximately 1.5 mm.

37. A chain according to claim 34 or any of the following claims, characterised in that the side walls (25) of the trough-like recesses (24) diverge at an angle of approximately 1.5° towards the long sides (8) of the tyre plate (6) on both sides of the longitudinal plane (LE).

38. A chain according to claim 34 or any of the following claims, characterised in that the bases (26) of the recesses (24) resemble a pitched roof with a pitch angle of approximately 1.5°.

39. A chain according to claim 33, characterised in that the non-slip inserts (41) are thicker than the depth (t) of the recesses (24) by an amount which takes into account wear caused by friction.

40. A chain according to claim 33 or 39, characterised in that the non-slip inserts (41) are profiled on the outsides (42).

41. A chain according to claim 33 or 39 or 40, characterised in that the non-slip inserts (41) are made of a silicone plastics which is heat-resistant, slip-resistant and abrasion-resistant.

42. A chain according to claim 43 or any of claims 39-41, characterised in that the inserts (41) are vulcanized into the recesses (24).

43. A chain according to claims 22 and 33, characterised in that the inserts (41) are unitary with the securing blocks (34, 34a).

## Revendications

1. Chaîne pour pneumatiques, antidérapante pour véhicules montés sur pneumatiques en caoutchouc, notamment pour les engins de terrassement lourds et à vitesse rapide, laquelle est munie de corps de base (2) de conception essentiellement uniforme, reposant sur la surface du pneu par l'intermédiaire d'une plaque d'appui de pneumatique (6), de préférence d'une seule pièce et sans soudure, lesquels respectivement en plus de la plaque d'appui de pneumatique (6), comportent une plaque de roulement (7) espacée de cette plaque d'appui par un intervalle et essentiellement parallèle à celle-ci, des étriers de retenue (4) en forme d'œillets, recourbés vers l'extérieur, se prolongeant depuis la plaque d'appui de pneumatique (6) vers la plaque de roulement (7), sur lesquels s'engagent respectivement des étriers de jonction (3) du type à mailles, qui sont reliés aux corps de base limitrophes, des saillies de retenue (19) étant prévues sur les côtés intérieurs de la plaque d'appui de pneumatique et de la plaque de roulement (6, 7) dans l'intervalle situé entre la plaque d'appui et la plaque de roulement, dirigées l'une vers l'autre, derrière lesquelles s'engagent des tenons d'arrêt (27), qui sont agencés sur les extrémités des ailes des étriers de jonction (3), et les saillies de retenue (4) et les étriers de jonction (3) étant conçus et agencés de manière telle que ces derniers se situent dans un plan sensiblement perpendiculaire par rapport au plan des étriers de retenue (4) et que leur axe longitudinal forme un angle sensiblement droit avec l'axe longitudinal des étriers de retenue, caractérisée en ce que perpendiculairement au plan longitudinal commun des étriers de retenue s'étend une âme de stabilisation (14), qui relie la plaque d'appui de pneumatique (6) avec la plaque de roulement (7), en ce que les parois latérales (15, 16) de l'âme de stabilisation (14) débouchant dans les côtés longitudinaux (8) des plaques (6, 7) — en partant du plan longitudinal (LE) — convergent en direction des extrémités (17) arrondies libres, et en ce que la paroi latérale (16) de l'âme de stabilisation (14) s'étendant sensiblement dans le plan transversal vertical (QE) du corps de base (2) diverge vers les deux côtés du plan longitudinal (LE) au moins sur une partie (16a) de leur longueur sous un angle d'environ 30° et avec la section longitudinale restante (16b) sous un angle d'environ 1,5° par rapport au plan transversal (QE) en direction des côtés longitudinaux (8).

2. Chaîne selon la revendication 1, caractérisée en ce que la distance (a) entre les saillies de retenue (19a, 19b ou 19b, 19c) affectées aussi bien à la surface d'appui de pneumatique (6) qu'à la plaque de roulement (7) est sensiblement égale à la distance (d) des saillies de retenue (19a-d) par rapport à la profondeur extrême d'arrondi (20) de chacun des étriers de retenue (4) limitrophes.

3. Chaîne selon les revendications 1 et 2, caractérisée en ce que la paroi latérale de l'âme de stabilisation (14) s'étendant sensiblement dans le plan transversal vertical (QE) du corps de base (2) est agencée à une certaine distance (21) par rapport aux saillies de retenue (19a, 19b) qui lui sont limitrophes, laquelle distance correspond sensiblement à l'épaisseur (f) des ailes de l'étrier de jonction (28, 29).

4. Chaîne selon la revendication 1 ou l'une des revendications suivantes, caractérisée en ce que la hauteur (h) des saillies de retenue (19a-d) est dimensionnée de façon approximativement égale à la longueur (e) des tenons d'arrêt (27).

5. Chaîne selon la revendication 1 ou l'une des revendications suivantes, caractérisée en ce que la longueur (L) des saillies de retenue (19a-d) correspond sensiblement à l'épaisseur (f) double d'une aile de l'étrier de jonction (28, 29).

6. Chaîne selon la revendication 1 ou l'une des revendications suivantes, caractérisée en ce que les parois latérales (44) des saillies de retenue (19a-d)· entrant en contact avec les surfaces d'appui (45) des tenons d'arrêt (27) sont de conception plane et s'étendent essentiellement à angle droit par rapport aux côtés intérieurs (12, 18) des plaques (7, 6).

7. Chaîne selon l'une des revendications 1 à 5, caractérisée en ce que les parois latérales (44a) des saillies de retenue (19a-d) présentent une courbure concave et les surfaces d'appui (45a) des tenons d'arrêt (27) venant en butée sur celles-ci présentent une voussure convexe correspondante.

8. Chaîne selon l'une des revendications 1 à 7, caractérisée en ce que la paroi latérale (15) espacée à une distance égale à l'épaisseur de l'âme de stabilisation (14) des plans transversaux (QE) converge des deux côtés du plan longitudinal (LE) sous un angle d'environ 1,5° par rapport au plan transversal (QE) en direction des côtés longitudinaux (8).

9. Chaîne selon l'une des revendications 1 à 8, caractérisée en ce qu'une aile (28) des étriers de jonction (3) en forme de U est de conception droite tandis que l'autre aile (29) est recourbée en forme de S.

10. Chaîne selon la revendication 9, caractérisée en ce que l'aile (29) en forme de S est constituée par trois sections longitudinales (30, 31, 32), dont les deux sections longitudinales extérieures (30, 32) s'étendent parallèlement aux ailes limitrophes (28) droites et sont reliées par des sections longitudinales (31) agencées obliquement.

11. Chaîne selon la revendication 10, caractérisée en ce que les deux sections longitudinales extérieures (30, 32) sont décalées d'environ l'épaisseur (f) d'une aile (28, 29) transversalement l'une par rapport à l'autre.

12. Chaîne selon la revendication 1 ou l'une des revendications suivantes, caractérisée en ce que l'épaisseur (f) des ailes (28, 29) est dimensionnée de façon sensiblement égale aux 2/3 de leur hauteur (g).

13. Chaîne selon la revendication 1 ou l'une des revendications suivantes, caractérisée en ce que les tenons d'arrêt (27) se prolongent dans les plans verticaux des ailes (28) ou des sections longitudinales d'ailes (32).

14. Chaîne selon la revendication 13, caractérisée en ce que la longueur (e) des tenons d'arrêt (27) correspond sensiblement à leur demi-largeur (k) ou à leur demi-épaisseur (m).

15. Chaîne selon l'une des revendications 1 à 10, caractérisée en ce que les côtés intérieurs (12, 18) des plaques (7, 6) divergent des deux côtés depuis les plans longitudinaux (LE) sous un angle d'environ 1,5° vers les côtés longitudinaux (8).

16. Chaîne selon l'une des revendications 1 à 10 ou 15, caractérisée en ce que les côtés longitudinaux (8) des plaques (6, 7) dans la zone du plan transversal (QE) présentent un évidement concave.

17. Chaîne selon l'une des revendications 1 à 10, 15 ou 16, caractérisée en ce que la plaque de roulement (7) est dimensionnée selon une épaisseur supérieure d'un multiple à celle de la plaque d'appui (6).

18. Chaîne selon la revendication 17, caractérisée en ce que la plaque de roulement (7) est dimensionnée selon une épaisseur d'environ 2 à 3 fois celle de la plaque d'appui (6).

19. Chaîne selon l'une des revendications 1 à 10 ou 15 à 18, caractérisée en ce que la plaque de roulement (7) présente une configuration de tronc de pyramide avec les bords (10) arrondis s'étendant de façon convexe sur la hauteur (H).

20. Chaîne selon la revendication 19, caractérisée en ce que les bords s'étendant selon la hauteur (10) sont constitués par plusieurs sections courbes avec des rayons différents ($R_1$ à $R_4$).

21. Chaîne selon les revendications 1 et 19, caractérisée en ce que les étriers de retenue (4) se poursuivent de façon adaptée aux contours dans les plaques de roulement (7) renforcées en épaisseur.

22. Chaîne selon l'une des revendications 1 à 10 ou 15 à 21, caractérisée en ce que des évidements (22) sont prévus dans les plaques d'appui (6) entre les âmes de stabilisation (14) et les saillies de retenue (19a, 19b) limitrophes espacées selon une certaine distance entre elles, lesquels évidements servent à recevoir des pièces de blocage (34, 34a, 34b).

23. Chaîne selon la revendication 22, caractérisée en ce que les pièces de blocage (34, 34a, 34b) peuvent être fixées sur la plaque d'appui (6).

24. Chaîne selon la revendication 22, caractérisée en ce que les pièces de blocage (34, 34a, 34b) peuvent être insérées entre la plaque d'appui (6) et la plaque de roulement (7).

25. Chaîne selon la revendication 22 ou l'une des revendications suivantes, caractérisée en ce que les pièces de blocage (34, 34a, 34b) présentent des appendices (36, 38, 40) en saillie dans le sens du plan transversal (QE).

26. Chaîne selon la revendication 25, caractérisée en ce que les appendices (36) présentent une conception de type came.

27. Chaîne selon la revendication 25, caractérisée en ce que les appendices présentent une configuration de tenons de serrage (40) cunéiformes.

28. Chaîne selon la revendication 25, caractérisée en ce que les appendices se présentent sous forme de barrettes élastiques (38).

29. Chaîne selon la revendication 22 ou l'une des revendications suivantes, caractérisée en ce que les pièces de blocage (34, 34a) consistent en une matière pleine.

30. Chaîne selon l'une des revendications 22 à 28, caractérisée en ce que les pièces de blocage (34b) présentent une conception en forme de U.

31. Chaîne selon la revendication 22 ou l'une des revendications suivantes, caractérisée en ce que la section transversale des pièces de blocage (34, 34a) et ainsi également celle des évidements (22) dans la plaque d'appui (6) est rectangulaire, carrée, ovale ou ronde.

32. Chaîne selon la revendication 22 ou l'une des revendications suivantes, caractérisée en ce que les pièces de blocage (34, 34a, 34b) consistent en une matière synthétique au silicone déformable élastiquement, laquelle est en outre résistante à l'abrasion et à la chaleur.

33. Chaîne selon la revendication 1 ou l'une des revendications suivantes, caractérisée en ce que des creux (24) sont usinés dans les côtés extérieurs (23) de la plaque d'appui (6) pour loger des inserts anti-dérapants (41).

34. Chaîne selon la revendication 33, caractérisée en ce que les creux (24) sont de conception similaire à des sillons, s'étendent dans le sens des plans transversaux (QE) et débouchent dans les côtés longitudinaux (8) de la plaque d'appui (6).

35. Chaîne selon la revendication 34, caractérisée en ce que la largeur (b) des creux (24) en forme de sillons est dimensionnée de façon très légèrement inférieure à la longueur (1) de la plaque d'appui (6).

36. Chaîne selon les revendications 34 ou 35, caractérisée en ce que la profondeur (t) des creux (24) en forme de sillons est d'environ 1,5 mm.

37. Chaîne selon la revendication 34 ou l'une des revendications suivantes, caractérisée en ce que les parois latérales (25) des creux (24) en forme de sillon divergent des deux côtés du plan longitudinal (LE) en direction des côtés longitudinaux (8) de la plaque d'appui (6) sous un angle d'environ 1,5°.

38. Chaîne selon la revendication 34 ou l'une des revendications suivantes, caractérisée en ce que les fonds (26) des creux (24) en forme de sillons présentent une conception en forme de toit sous un angle d'approximativement 1,5°.

39. Chaîne selon la revendication 33, caractérisée en ce que les inserts anti-dérapants (41) sont dimensionnés sur une épaisseur qui tient compte de l'usure par friction, supérieure à la profondeur (t) des creux (24).

40. Chaîne selon les revendications 33 ou 39, caractérisée en ce que les inserts anti-dérapants (41) sur les côtés extérieurs (42) sont profilés.

41. Chaîne selon les revendications 33, 39 ou 40, caractérisée en ce que les inserts anti-dérapants (41) consistent en une matière synthétique au silicone, laquelle est résistante à la chaleur, anti-dérapante et résistante à l'abrasion.

42. Chaîne selon la revendication 33 ou l'une des revendications 39 à 41, caractérisée en ce que les inserts anti-dérapants (41) sont introduits par vulcanisation dans les creux (24).

43. Chaîne selon les revendications 22 et 33, caractérisée en ce que les inserts anti-dérapants (41) sont conçus d'une seule pièce avec les pièces de blocage (34, 34a).

Fig. 1

Fig. 2

Fig. 3

**0 108 154**

Fig. 4

Fig. 5

Fig. 6

Fig. 7

Fig. 8

Fig. 9

Fig. 10

KR

XIV

3

R₆

30

R₅

31

28

XIII

XIV

XIII

32

27

k

m

27

Fig. 11

g

e

27

27

27

Fig 12

27

R₉

28

27

f

Fig. 13

27

29

27

R₈

R₇

Fig. 14

Fig. 15

Fig. 16

Fig. 17

Fig. 18

Fig. 19

Fig. 20